# EUROPÄISCHE PATENTANMELDUNG

(11) **EP 4 467 520 A1**
(43) Veröffentlichungstag der Anmeldung: **27.11.2024**
(21) Anmeldenummer: 24176690.6
(22) Anmeldetag: 17.05.2024
(51) Int. Cl.: C02F 11/00, C02F 9/00, B01D 53/58, C02F 11/04, C02F 11/18, C02F 1/20, C02F 1/52, C02F 1/66, C02F 101/10, C02F 101/16, C02F 103/20

(54) **VERFAHREN UND VORRICHTUNG ZUR RÜCKGEWINNUNG VON PHOSPHOR ODER AMMONIUMSTICKSTOFF AUS GÜLLEN ODER SCHLÄMMEN**

(30) Priorität: 26.05.2023 DE 102023113927
(71) Anmelder: Prüf- und Forschungsinstitut Pirmasens e.V., 66953 Pirmasens (DE)
(72) Erfinder: PACAN, Benjamin, 66957 Trulben (DE); SCHADEWELL, Christian Rudolf, 66978 Merzalben (DE); FIEHN, Thomas, 66919 Weselberg (DE)
(74) Vertreter: Patentanwälte Dr. Keller, Schwertfeger Partnerschaft mbB

(57) **Zusammenfassung**

Die vorliegende Erfindung betrifft ein Verfahren und eine Vorrichtung zur Rückgewinnung von Phosphor oder Ammoniumstickstoff aus Güllen oder Schlämmen, umfassend die Schritte:
- Aufschluss von Gülle oder Schlamm bei alkalischem pH,
- Durchführen einer Ammoniak-Strippung mittels eines methanhaltigen-Strippgases, wodurch Ammoniak freigesetzt wird,
- Entfernen von überschüssigem Ammoniak aus dem methanhaltigen Strippgas in einem Ammoniak-Wäscher durch Lösen von Ammoniak in Wasser zu einer wässrigen Ammoniak-Lösung,
- pH-Konditionierung der behandelten Gülle oder des Schlammes durch Einsatz eines CO₂-haltigen Gases und/oder Zugabe einer Säure,
- Ausfällen eines Ammonium-Phosphat-Salzes durch Kristallisation zur Gewinnung von Phosphor und/oder Ammoniumstickstoff.

## Beschreibung

Die vorliegende Erfindung betrifft ein Verfahren und eine Vorrichtung zur Rückgewinnung von Phosphor oder Ammoniumstickstoff aus Güllen oder Schlämmen.

Im Stand der Technik sind unterschiedliche Verfahren und Vorrichtungen zur Phosphorrückgewinnung bekannt. Eine Möglichkeit besteht darin, Klärschlammasche im Zuge einer Klärschlammmonoverbrennung zu gewinnen, wobei es verschiedene Ansätze gibt. Ein anderer Ansatz beschäftigt sich mit der Phosphorrückgewinnung aus dem Kläranlagenablauf, bei der häufig eine MAP-Fällung mit Magnesiumammoniumphosphat (Struvit) durchgeführt wird. Dazu werden Magnesiumsalze zugesetzt, die mit dem Ammonium und dem Phosphat im Abwasser ausfallen: Mg²⁺ + NH₄⁺ + PO₄³⁻ + 6 H₂O → MgNH₄PO₄ · 6 H₂O. Das Ausfällen von Phosphor als MAP wird beispielsweise beschrieben in der DE 10 2008 050 349 A1 und in der DE 10 2007 035 910 B4.

Die Fällung als MAP lässt sich auch als Kristallisationsverfahren realisieren. Der Vorteil der Kristallisationsverfahren ist eine hohe Produktreinheit bei niedrigem Wassergehalt. Neben MAP können auch Calciumphosphat, Magnesiumphosphat oder Hydroxylapatit auskristallisiert werden. Der Vorteil des Kristallisationsverfahrens liegt darin, dass das Produkt nach Lufttrocknung nur 1 bis 5 % Wasser enthält, zu 90 bis 98 % aus MAP (bzw. den anderen möglichen Zielprodukten) besteht und auch der Sandanteil unter 5 % liegt. Auch der Schwermetallanteil ist gering. Ein weiteres Fällungsverfahren zur Phosphorfällung nutzt die Verbindung MgKPO₄ ·6 H₂O, die auch MKP genannt wird. Bei dieser Fällung wird anstelle eines Ammonium-Ions ein Kalium-Ion gebunden. Die Fällung von Phosphor und Kalium als MKP wird beispielsweise beschrieben in der EP 0114038 A2, der EP 2635534 B1 und der DE 10 2014 207 842 B3.

Es gibt auch die Möglichkeit zur Phosphorrückgewinnung aus Klärschlamm. Generell kann die Phosphatfällung direkt im Schlamm durchgeführt werden. Bei einer direkten Fällung im Schlamm ergibt sich das Problem, dass ein phosphatreicher Schlamm schlechter vermarktet werden kann als aufkonzentriertes Phosphat. Alternativ muss versucht werden, aufwendig den organischen Anteil vom gefällten Phosphat abzutrennen. Daher ist eine Rückgewinnung aus dem Schlammwasser nach Vorbehandlung der Schlämme günstiger.

Die DE3736568A1 beschreibt ein Verfahren zur Gewinnung von elementarem Phosphor aus Abfallschlamm, insbesondere dem Schlamm von Absetzbecken, durch Erhitzen eines Gemisches aus dem Schlamm und Wasser, Waschen des Schlammes bei erhöhter Temperatur und erneutem Erhitzen des Schlammes. Elementarer Phosphor kann leicht aus der konzentrierten Phosphorschicht gewonnen werden, die während des Behandlungsverfahrens erzeugt wird.

In der DE 10 2005 002 066 A1 wird die Gewinnung von MAP aus dem Schlamm einer Kläranlage beschrieben, wobei die Ausfällung in einer Kristallisationszone unter Zugabe von Magnesiumionen erfolgt. In der DE 38 33 039 A1 wird aus dem Abwasser eine Biomasse mit hohem Phosphatgehalt abgetrennt, einem anaeroben Faulungsprozess unterworfen und ein phosphat- und ammonium-haltiges Filtrat erhalten. Aus diesem separierten Filtrat wird das Phosphat unter Zugabe von Magnesiumionen ausgefällt. Diese Verfahren entziehen den Phosphor somit ausschließlich über den Umweg der Einbindung des Phosphors in den belebten Schlamm aus dem Abwasser. Danach wird der Phosphor mit Hilfe aufwändiger Verfahren wieder aus dem belebten Schlamm extrahiert, um dann als MAP gefällt zu werden.

Die DE 10 2008 050 349 A1 beschreibt ein Verfahren zur Verwendung in einer Abwasserbehandlungsanlage zur Phosphor-Ausfällung aus mit Phosphor belastetem Abwasser unter Bildung von MAP (Magnesium-Ammonium-Phosphat)-Kristallen. Dabei wird in einer Kristallisations-Stufe das Abwasser mit Magnesiumchlorid versetzt wird und der Kristallisations-Stufe eine Ausstrip-Stufe vorgeschaltet, in der das Abwasser mit Luft versetzt wird.

Die EP 0 490 396 A1 beschreibt ein Verfahren zur Gewinnung der Ammoniumgehalte aus Prozess- und Abwässern unter Fällung von Magnesiumammoniumphosphat, wobei zur beschleunigten Fällung und Abscheidung von Magnesiumammoniumphosphat dem zu behandelnden Abwasser in einer Fällungsstufe gleichzeitig eine Magnesiumphosphatverbindung und Natronlauge zugesetzt werden, während der pH-Wert im Bereich von etwa 8,0 bis 10,0 konstant gehalten wird. Das abgeschiedene Magnesiumammoniumphosphat wird in einer Regenerierungsstufe zerlegt und als Fällungsmittel wieder in die Fällungsstufe zurückgeführt.

Obwohl verschiedene Verfahren zur Phosphorrückgewinnung bekannt sind, erfordern diese hohen Chemikalieneinsatz, insbesondere Natronlauge (NaOH), und sind aufgrund der eingesetzten Entwässerungsaggregate und der Ultrafiltration sehr energieintensiv. Alle Prozessschritte werden bei diesen separat betrachtet und es sind keine Synergien zwischen den Prozessschritten erkennbar.

Vor diesem Hintergrund ist es Aufgabe der vorliegenden Erfindung, ein Verfahren und eine Vorrichtung zur Phosphorrückgewinnung aus Gülle oder Schlämmen bereitzustellen, die die Erforderlichkeit der Zugabe von Lauge und Säure erheblich reduzieren bzw. vermeiden, den alkalischen Aufschluss der Gülle oder des Schlammes optimieren und die Gase aus dem Prozess nutzen.

Diese Aufgabe wird durch das erfindungsgemäße Verfahren sowie die erfindungsgemäße Vorrichtung gelöst. Bevorzugte Ausführungsvarianten werden in den Unteransprüchen beansprucht.

Das erfindungsgemäße Verfahren umfasst folgende Schritte:
- Aufschluss von Gülle oder Schlamm bei alkalischem pH,
- Durchführen einer Ammoniak-Strippung mittels eines methanhaltigen-Strippgases, wodurch Ammoniak freigesetzt wird,
- Entfernen von überschüssigem Ammoniak aus dem methanhaltigen Strippgas in einem Ammoniak-Wäscher durch Lösen von Ammoniak in Wasser zu einer wässrigen Ammoniak-Lösung,
- pH-Konditionierung der behandelten Gülle oder des Schlammes durch Einsatz eines CO₂-haltigen Gases und /oder Zugabe einer Säure,
- Ausfällen eines Ammonium-Phosphat-Salzes durch Kristallisation zur Gewinnung von Phosphor und/oder Ammoniumstickstoff.

Der hier benutzte Begriff "Gülle" umfasst sämtliche organische Düngeformen, die in der Regel Kot- oder Harn-Bestandteile von landwirtschaftlichen Nutztieren enthalten, wozu auch Jauche gehört. Jauche hat in der Regel einen höheren Kalium- und Stickstoff-Gehalt.

Bei dem im erfindungsgemäßen Verfahren eingesetzten Schlamm handelt es sich vorzugsweise um einen Belebtschlamm bzw. belebten Schlamm, der vorwiegend aus Bakterien, Pilzen und/oder Protozoen besteht. Ein solcher Belebtschlamm kommt vorzugsweise aus Kläranlagen, wo er Bestandteil beim Belebtschlammverfahren ist und die Nitrifikation übernimmt.

Das Verfahren umfasst in einer ersten Ausführungsvariante vorzugsweise eine alkalische Behandlung der Gülle oder des Schlammes, um so einen alkalischen pH herbeizuführen. Vorzugsweise wird der pH bei der alkalischen Behandlung auf > 8 angehoben. Anschließend erfolgt bei alkalischem pH der Aufschluss der alkalisch behandelten Gülle oder des Schlammes.

In einer bevorzugten Ausführungsvariante erfolgt ein hydrothermaler Aufschluss der Gülle oder des Schlammes zu einer aufgeschlossenen Biomasse. Anschließend erfolgt ein Abbau der durch den hydrothermalen Aufschluss aufgeschlossenen Biomasse in einer Hochlastfaulung zu Faulschlamm und Biogas.

Der hydrothermale Aufschluss und die Hochlastfaulung sind jedoch optional. In einer bevorzugten Variante kann auch eine Hochlastfaulung ohne hydrothermalen Aufschluss erfolgen.

Die Ammoniak-Strippung wird mit einem methanhaltigen Strippgas durchgeführt, wodurch Ammoniak-Stickstoff freigesetzt wird. Bei dem methanhaltigen Strippgas handelt sich vorzugsweise um Klärgas oder Biogas mit einem hohen Methangehalt. Die Ammoniak-Strippung wird vorzugsweise mittels des während der Hochlastfaulung erhaltenen CO₂ oder durch Begasung mittels Methangas oder eines Methangasgemisches als Strippgas durchgeführt.

Um überschüssiges Ammoniak (NH₃) zu entfernen, ist erfindungsgemäß ein Ammoniak-Wäscher vorgesehen, bei dem Ammoniak in Wasser zu einer wässrigen Ammoniak-Lösung gelöst wird. Um den pH-Wert im Stoffstrom (Gülle oder Schlamm) abzusenken, erfolgt eine pH-Konditionierung durch Zugabe einer Säure und/oder eines CO₂-haltigen Gases oder Gasgemisches. Bei dem CO₂₋haltigen Gas handelt es sich vorzugsweise um Biogas, das in dem Prozess entsteht oder für die Konditionierung von außen zugeführt wird. Bei der Säure handelt es sich vorzugsweise um Salzsäure (HCl). Bevorzugt ist ein pH-Wert im Bereich von 8,5 - 9. Nach der pH-Konditionierung wird ein Ammoniumphosphatsalz durch Kristallisation ausgefällt, um so den erwünschten Phosphor oder Ammonium-Stickstoff zu gewinnen. Vorzugsweise erfolgt die Kristallisation durch Zugabe von MgCl₂. Es kommt dann zum Ausfall von Struvit. Vorzugsweise ist eine Kristallkonditionierung (MAP) mit Bildung von Makrokristallen vorgesehen. Mikrokristalle können wiederum über einen Kristallabscheider aufgefangen und der Kristallisation zugeführt werden.

In einer bevorzugten Ausführungsform wird vor der pH-Konditionierung zusätzlich eine thermoalkalische Behandlung der Gülle oder des Schlammes bei alkalischem pH durchgeführt. Vorzugsweise beträgt die Verweilzeit mindestens ein Tag. In einer weiter bevorzugten Variante ist vorgesehen, dass die thermoalkalische Behandlung der Gülle oder des Schlammes bei alkalischem pH in einem P-Reaktor durchführt wird. Der Begriff P-Reaktor wie hier verwendet bezeichnet einen Behälter oder Rohr, bei dem nach Anhebung des pH eine Inkubation der Gülle oder des Schlammes erfolgt, bis der Phosphor in wässrige Lösung geht, wodurch lösliches Phosphat entsteht. Vorzugsweise erfolgt die Inkubation für wenigstens einen Tag.

In einer weiterentwickelten Variante des erfindungsgemäßen Verfahrens erfolgt nach dem Aufschluss des Schlammes eine CO₂-Strippung des Faulschlammes aus der Hochlastfaulung, so dass das im Schlamm gebundene CO₂ mittels Strippgas, vorzugsweise Methangas oder einer Methangasmischung (z.B. Biogas), aus dem Schlamm verdrängt wird, wodurch es zu einer pH-Anhebung kommt. Das Strippgas für die CO₂-Strippung sollte möglichst CO₂-frei sein und wird vorzugsweise aus der pH-Konditionierung und/oder dem Ammoniak-Wäscher gewonnen.

Vorzugsweise wird nach der CO₂-Strippung eine NH₃-Konditionierung durchgeführt. Hierbei entsteht u.a. CO₂ bzw. ein CO₂-haltiges Gasgemisch. Dieses Gas kann als Strippgas dem NH₃-Wäscher zugeführt werden. Ammoniakwasser aus dem NH₃-Wäscher kann entweder für die Kristallisation verwendet werden oder für die Anhebung des pH beim P-Reaktor. Dies erfolgt durch Zugabe von Ammoniakwasser aus dem Ammoniak-Wäscher zur Gülle oder zum Schlamm. Dabei entsteht Ammoniak und der pH wird deutlich in den alkalischen Bereich angehoben. Von dort gelangt der Stoffstrom (d.h. die Gülle oder der Schlamm) in den P-Reaktor.

Das Verfahren umfasst in einer bevorzugten Ausführungsform eine CO₂-Strippung des Faulschlammes aus der Hochlastfaulung, bei der das im Schlamm gebundene CO₂ mittels Methangas oder einer Methangasmischung aus dem Schlamm verdrängt wird, wodurch es zu einer pH-Anhebung kommt. Damit erfolgt ein alkalischer Aufschluss des CO₂-gestrippten Faulschlammes bei alkalischem pH. Nach der CO₂-Strippung wird erfindungsgemäß in einer bevorzugten Variante eine Ammoniak-Konditionierung durchgeführt. Das Strippgas für die CO₂-Strippung wird vorzugsweise aus der Ammoniak-Konditionierung, alternativ oder zusätzlich aus der pH-Konditionierung und/oder dem Ammoniak-Wäscher gewonnen. Überschüssiger Ammoniumstickstoff wird in einem Ammoniak-Wäscher durch Lösen von Ammoniak in Waschflüssigkeit, vorzugsweise Wasser, zu Ammoniakwasser entfernt.

Da bevorzugte Varianten des erfindungsgemäßen Verfahrens eine CO₂-Strippung und eine Ammoniak-Strippung vorsehen, kann die Zugabe von Natronlauge für die Lösung von Phosphatverbindungen, wie z.B. Aluminiumphosphat, in dem Behälter (P-Reaktor) reduziert oder ganz darauf verzichtet werden, beispielsweise durch Einsatz anderer Laugen wie Ammoniakwasser. Dies hat zur Folge, dass bei der pH-Konditionierung eine geringere Menge an Salzsäure zur pH-Einstellung für die MAP-Kristallisation benötigt wird. Vorzugsweise erfolgt eine Einstellung des pH auf 8,5 - 9.

In einem bevorzugten Verfahrensschritt wird Belebtschlamm, vorzugsweise von einer Kläranlage, durch hydrothermalen Aufschluss zu einer Biomasse aufgeschlossen. Der hydrothermale Aufschluss erfolgt vorzugsweise bei einer Temperatur zwischen 100 °C und 160 °C, bevorzugt bei einer Temperatur zwischen 130 °C und 150 °C, vorzugsweise bei einer Temperatur von etwa 140 °C. Der Druck während des Aufschlusses beträgt vorzugsweise zwischen 8 und 12 bar, bevorzugt 10 bar. Der hydrothermale Aufschluss verringert die Verweilzeit in der sich anschließenden Hochlastfaulung, wodurch der Durchsatz erhöht werden kann. Die mittlere Verweilzeit beträgt beim hydrothermalen Aufschluss dann etwa eine Stunde.

Die so aufgeschlossene Biomasse wird in der bevorzugten Ausführungsvariante dann vorzugsweise in einer Hochlastfaulung zu Biogas abgebaut. Vorzugsweise erfolgt die Hochlastfaulung unter thermophilen Bedingungen bei einer Temperatur zwischen 50°C und 65° C, vorzugsweise bei 55° C. Der pH liegt vorzugsweise zwischen 6,8 und 7,4, also in einem neutralen Bereich. In einer weiter bevorzugten Variante ist vorgesehen, dass die Biomasse während der Hochlastfaulung umgewälzt wird. Die Animpfung erfolgt mit einem Impfschlamm. Das in der Hochlastfaulung entstehende Gasgemisch hat einen hohen Methananteil, der üblicherweise bei etwa 60% liegt. Die Verweilzeit beträgt vorzugsweise weniger als 10 Tage.

Nach der Hochlastfaulung erfolgt in der bevorzugten Variante eine CO₂-Strippung des Faulschlammes aus der Hochlastfaulung, bei der das im Schlamm gebundene CO₂ mittels Methangas oder einer CO₂-freien Methangasmischung aus dem Schlamm verdrängt wird. Dies führt zu einer Erhöhung des pH-Werts. Anschließend erfolgt die NH₃-Konditionierung. Zwischen dem NH₃-Konditionierer und dem P-Reaktor erfolgt bedarfsweise die Zugabe von NaOH zur Anhebung des pH-Wertes.

Beim alkalischen Aufschluss des Schlammes bzw. der Gülle wird die Phosphorlöslichkeit für die MAP-Kristallisation maximiert. Der Aufschluss erfolgt vorzugsweise im P-Reaktor. Die hydraulische bzw. mittlere Verweilzeit im P-Reaktor beträgt vorzugsweise wenigstens einen Tag.

Zwischen P-Reaktor und pH-Konditionierer wird bedarfsweise Citrat als Komplexbildner für Aluminium zugeführt. Um den pH nach dem alkalischen Aufschluss wieder abzusenken, wird eine pH-Konditionierung, vorzugsweise durch Zugabe von einem CO₂-haltigen Gas durchgeführt. Die Zugabe von HCl erfolgt bedarfsweise zwischen dem pH-Konditionierer und der MAP-Kristallisation, um die pH-Absenkung durchzuführen.

Überschüssige Konzentrationen an Ammoniak-Stickstoff werden erfindungsgemäß in einem Ammoniak-Wäscher durch Lösen von Ammoniak in Waschflüssigkeit als Ammoniak-Flüssigkeit aus dem Prozess entfernt. Üblicherweise handelt es sich bei der Waschflüssigkeit um Wasser. Vorzugsweise enthält die Waschflüssigkeit Schwefelsäure, wodurch gelöstes Ammoniak zu Ammoniumsulfat umgewandelt wird.

Schließlich sieht das erfindungsgemäße Verfahren das Ausfällen des Ammonium-Phosphat-Salzes aus dem zuvor gelösten Phosphat vor. Dies erfolgt vorzugsweise mit den Salzen MgCl₂ oder KCl. In einer bevorzugten Variante ist vorgesehen, dass nach der Kristallisation Mikrokristalle mittels eines oder mehrerer Hydrozyklone und/oder Nasssiebe aus dem Schlamm abgetrennt und dem Kristallisationsprozess rückgeführt werden. Dadurch kann die Ausbeute des später gewonnenen Phosphors bzw. Ammonium-Stickstoffs gesteigert werden.

Mit Hilfe des erfindungsgemäßen Strip-Verfahrens wird das erfindungsgemäße Ziel erreicht, die Zugabe von Natronlauge für die Lösung von Aluminiumphosphat im P-Reaktor zu reduzieren oder sogar ganz darauf zu verzichten. Ferner wird auch die Menge an HCl bei der pH-Konditionierung für die pH-Einstellung vor der sich anschließenden MAP-Kristallisation reduziert.

In einer weiter bevorzugten Ausführungsvariante wird der phosphorentfrachtete Dünnschlamm zusammen mit dem Primärschlamm in den bestehenden Faulturm der Kläranlage gepumpt und zur Erzeugung von Biogas verwendet. Zusammen mit dem Biogas aus der Hochlastfaulung wird dieses Gas im BHKW zur Strom- und Wärmeproduktion genutzt. Der Faulschlamm wird anschließend in der Zentrifuge zu Klärschlamm mit hohen TS-Gehalten (> 28 %) entwässert. Auch erfolgt eine Gasreinigung des bei der pH-Konditionierung eingesetzten Biogases aus der Hochlastfaulung, indem neben CO₂ auch schädlicher Schwefelwasserstoff gebunden wird.

Damit die Betriebskosten gesenkt werden können, sieht die Erfindung eine Behälterkaskade für die Gasförderung in Verbindung mit handelsüblichen Wasserpumpen vor, die den Einsatz von Seitenkanalverdichtern und deren Kopplung mit aufwändiger Mess-, Steuerungs- und Regelungstechnik (MSR-Technik) ersetzt. Dabei sollen diese Behälter auch gleichzeitig als Ammoniak-Wäscher fungieren, was den Investitionsaufwand weiter senkt.

Die Erfindung betrifft auch eine Vorrichtung zur Rückgewinnung von Phosphor oder Ammoniumstickstoff aus Güllen oder Schlämmen zum Lösen von Ammoniak in Wasser zu einer wässrigen Ammoniak-Lösung, geeignet für den Einsatz in dem erfindungsgemäßen Verfahren, umfassend:
- Einrichtungen zum Aufschluss von alkalisch behandelter Gülle oder Schlamm bei alkalischem pH,
- Einrichtungen zum Durchführen einer Ammoniak-Strippung mittels eines methanhaltigen Strippgases, wodurch Ammoniak freigesetzt wird,
- Einrichtungen zum Entfernen von überschüssigem Ammoniak aus dem methanhaltigen Strippgas in einem Ammoniak-Wäscher durch Lösen von Ammoniak in Wasser zu einer wässrigen Ammoniak-Lösung,
- Einrichtungen zur pH-Konditionierung der behandelten Gülle oder des Schlammes durch Zugabe einer Säure und/oder eines CO₂-haltigen Gases oder Gasgemisches,
- Einrichtungen zum Ausfällen eines Ammonium-Phosphat-Salzes durch Kristallisation zur Gewinnung von Phosphor und/oder Ammoniumstickstoff.

In einer bevorzugten Variante ist vorgehen, dass der Ammoniak-Wäscher wenigstens eine Waschkolonne mit Einrichtungen zum Berieseln des Waschkolonneninneren mit Waschflüssigkeit von der Waschkolonnendecke umfasst, wodurch in einer Waschkolonne mit steigendem Flüssigkeitsspiegel ein Überdruck im Behälterinneren entsteht, und Einrichtungen zum Einleiten eines Ammoniak-angereicherten Gases, wobei das im Gas oder Gasgemisch vorhandene Ammoniak sich in der Flüssigkeit löst und das so Ammoniak-entfrachtete Gas oder Gasgemisch aus dem Behälterinneren über Gasleitungen im Kopfbereich zu einem Gasausgang oder einer weiteren Waschkolonne geleitet wird.

Vorzugsweise sind zwei oder mehr Waschkolonnen vorgesehen. Bei der ersten Waschkolonne erfolgt eine Gaszufuhr im Kopfbereich, indem Flüssigkeit von unten über eine Umwälzpumpe abgepumpt wird. Dadurch sinkt der Flüssigkeitsspiegel und es entsteht ein Unterdruck im Kopfbereich der ersten Waschkolonne. Die Flüssigkeit wird über Leitungen in den Kopfbereich der zweiten Waschkolonne überführt. Im Kopfbereich ist eine Berieselungseinrichtung angeordnet, wodurch eine Berieselung mit Flüssigkeit erfolgt und der Flüssigkeitsspiegel angehoben wird. Durch den Anstieg des Flüssigkeitsspiegels entsteht ein Überdruck im Behälterinneren der zweiten Waschkolonne. Dadurch wird das Ammoniak-entfrachtete Gas letztendlich über den Gasausgang ausgeleitet und dem Prozess rückgeführt. Gleichzeitig entsteht in der ersten Waschkolonne ein Unterdruck, wodurch mit Ammoniak angereichertes Gas über einen Gaseingang im Kopfbereich der Kolonne angesaugt wird. Die Steuerung erfolgt über dafür vorgesehene Ventile.

Hat der Füllstand in der zweiten Waschkolonne ein bestimmtes Niveau erreicht, wird ein Ventil geöffnet, wodurch Flüssigkeit über eine Umwälzpumpe abgesaugt wird. In der zweiten Waschkolonne entsteht wiederum ein Gasunterdruck. Diese Flüssigkeit dient wiederum der Berieselung über ein Ventil im Kopfbereich der ersten Waschkolonne. Durch die durch die Berieselung bedingte Flüssigkeitsbefüllung der ersten Waschkolonne erhöht sich der Druck. Der gesamte Prozess wird letztendlich über das Umschalten der Ventile kontrolliert. In einer bevorzugten Variante ist ein Reihenbetrieb oder Parallelbetrieb möglich. Der Reihenbetrieb ermöglicht einen höheren Umsatz, während der Parallelbetrieb ausfallsicherer ist.

In einer bevorzugten Variante erfolgt eine Zugabe von H₂SO₄ während des Umwälzprozesses, bevorzugt über eine Dosierpumpe. Die Dosierung kann vorzugsweise über den pH-Wert der Waschflüssigkeit gesteuert werden. Der pH-Wert ist indikativ für den Wascheffekt. Hat die Waschflüssigkeit die vorgegebene Ammoniumsulfatkonzentration erreicht wird sie ausgeschleust. Der Zeitpunkt des Ausschleusens erfolgt vorzugweise über eine Dichtemessung und/oder über eine Messung der Leitfähigkeit der Waschflüssigkeit. Hierfür können entsprechende Sensoren zum Einsatz kommen.

In einer Variante des Verfahrens erfolgt eine Ammoniak-Wäsche über einen Umwälzvorgang mittels zwei Waschkolonnen mit denen Ammoniak-entfrachtetes Gas ausgeleitet und dem Prozess rückgeführt wird. Vorzugsweise erfolgt eine Zugabe von H2SO4 während des Umwälzprozesses und/oder eine Temperierung der Waschflüssigkeit. In einer weiteren Ausführungsform werden beliebige Gase durch den Umwälzvorgang in den Waschkolonnen gefördert und komprimiert. Der Ammoniak-Wäscher sieht hierfür spezielle Einrichtungen vor.

Grundsätzlich sind in einem ersten Verfahrensschritt zumindest die alkalische Behandlung der Gülle oder des Schlammes sowie ein alkalischer Aufschluss der so behandelten Gülle oder des Schlammes bei einem alkalischen pH erforderlich. Anschließend wird eine Ammoniak-Strippung mittels CO₂, Methangas oder einer Methangas-Mischung durchgeführt, wodurch Ammoniak freigesetzt wird. Überschüssiges Ammoniak wird einem Ammoniak-Wäscher durch Lösung von Ammoniak in Wasser zu einer wässrigen Ammoniak-Lösung entfernt und der pH anschließend durch Zugabe einer Säure und/oder eines CO₂-haltigen Gases oder Gasgemisches konditioniert. Über eine MAP-Kristallisation erfolgt die Auswertung des Ammonium-Phosphat-Salzes zur Gewinnung von Phosphor oder Ammonium-Stickstoff.

Die Erfindung umfasst auch eine Vorrichtung zum Lösen von Ammoniak in Wasser zu einer wässrigen Ammoniak-Lösung, die für den Einsatz in dem erfindungsgemäßen Verfahren geeignet ist. Die Vorrichtung umfasst wenigstens eine, vorzugsweise zwei oder mehr Waschkolonnen, mit im Kopfbereich der Waschkolonnen angeordneten Ansaugleitungen für ein Gas oder ein Gasgemisch aus dem Behälterinneren, Berieselungseinrichtungen zur bedarfsweisen Befüllung der Waschkolonnen sowie Gaseingänge im Fußbereich der Waschkolonnen zur Befüllung der Waschkolonnen mit dem Gas oder Gasgemisch, sowie Pumpen für den Gas- oder Flüssigkeitstransport von und aus den wenigstens zwei Waschkolonnen. Ferner sind in einer bevorzugten Variante Dosiereinrichtungen für die Zugabe von H₂SO₄ für die wenigstens zwei Waschkolonnen vorgesehen. In einer bevorzugen Variante ist ferner ein Wärmetauscher für die Temperierung der Waschflüssigkeit während der Umwälzung vorgesehen. In einer weiterentwickelten Ausführungsvariante ist ferner eine Reihenschaltung mehrerer Waschkolonnen auf der Ansaug- sowie Austrittsseite vorgesehen.

Die Erfindung wird in den nachfolgenden Zeichnungen näher erläutert. Keinesfalls soll die beanspruchte Erfindung auf diese Ausführungsformen beschränkt sein. Auch Abwandlungen, Verknüpfungen und Kombinationen einzelner Merkmale der hier beschriebenen Ausführungsformen sind von der Erfindung umfasst. Die hier gezeigten Ausführungsformen sind lediglich Beispiele, auf welche Weise das erfindungsgemäße Verfahren und auch die Vorrichtung verwirklicht werden können.

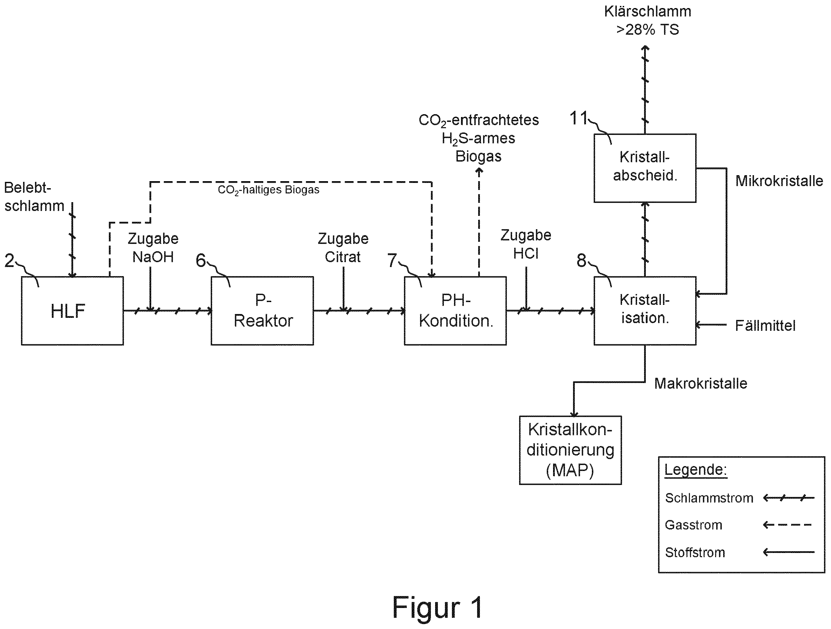

In Fig. 1 ist das Grundschema des erfindungsgemäßen Verfahrens gezeigt. Die Schlammströme, Gasströme und Stoffströme sind eingezeichnet. Aufgeschlossener Belebtschlamm, vorzugsweise von einer Kläranlage, wird einer Hochlastfaulung zugeführt (Prozessstufe 2). Der Faulschlamm hat vorzugsweise eine Temperatur zwischen 50 °C und 70 °C, vorzugsweise ca. 55 °C. Bei der Hochlastfaulung erfolgt eine thermophile Fermentation bei neutralem pH. Üblicherweise erfolgt zur Durchführung der Hochlastfaulung zunächst eine Animpfung, vorzugsweise mit Impfschlamm aus Kläranlagen. Ein Rührwerk sorgt für die erforderliche Umwälzung. Das entstehende Faulgas umfasst ca. 60 % Methan und 40 % CO₂. Die Hochlastfaulung ermöglicht einen schnellen und effizienten Biomasseabbau zu Methan unter thermophilen Bedingungen, da die Verweilzeit weniger als 10 Tage beträgt.

Das bei der Hochlastfaulung entstehende Biogas wird dem pH-Konditionierer zugeführt (Prozessstufe 7). Um den pH im P-Reaktor (Prozessstufe 6) zu erhöhen, erfolgt vor dem P-Reaktor die Zugabe von NaOH. Zwischen P-Reaktor und pH-Konditionierer wird Citrat als Komplexbildner für Aluminium zugeführt. Bei der pH-Konditionierung entsteht CO₂-entfrachtetes H₂S-armes Biogas. Die Zugabe von HCl erfolgt bedarfsweise zwischen dem pH-Konditionierer und der Kristallisation. Für die Kristallisation werden Fällmittel zugeführt. Die gewonnenen Makrokristalle unterliegen einer Kristallkonditionierung (MAP). Mikrokristalle werden aus einem Kristallabscheider gewonnen (Prozessstufe 11) und der Kristallisation (Prozessstufe 8) zugeführt.

Nach der pH-Konditionierung erfolgt die Kristallisation (Magnesium-Ammonium-Phosphat-Fällung (MAP)-Fällung), im gezeigten Ausführungsbeispiel vorzugsweise durch Zugabe von MgCl₂ (Prozessstufe 8). Beim erfindungsgemäßen Verfahren ist die Ammoniak-Konditionierung (Prozessstufe 5) optional.

Für die MAP-Fällung wird in der Regel Magnesiumchlorid eingesetzt, so dass das gelöste ortho-Phosphat in Form von Magnesium-Ammonium-Phosphat gewonnen wird. In einer hier nicht gezeigten Ausführungsform ist auch die Fällung mit KCl möglich, allerdings ist Kalisalz schwerer löslich. Mit Hilfe des erfindungsgemäßen Kohlendioxidstrip-Verfahrens (Prozessstufe 3) wird das erfindungsgemäße Ziel erreicht, die Zugabe von Natronlauge für die Lösung von Aluminiumphosphat im P-Reaktor (Prozessstufe 6) zu reduzieren. Ferner wird auch die Menge an HCl nach der pH-Konditionierung (Prozessstufe 7) zur pH-Einstellung bei der sich anschließenden MAP-Kristallisation (Prozessstufe 8) reduziert. Der pH wird damit stabil zwischen 8,5 und 9 gehalten. Sowohl die CO₂-Strippung als auch die Ammoniak-Strippung erfolgen durch eine Begasung mit einem Methangas-Gemisch, vorzugsweise mit einem Reinheitsgehalt von > 95 %. Dies wird einerseits durch die Kreislaufführung der Gase zwischen der CO2-Strippung und der pH-Konditionierung und anderseits zwischen der NH3-Konditionierung und dem NH3-Wäscher erreicht.

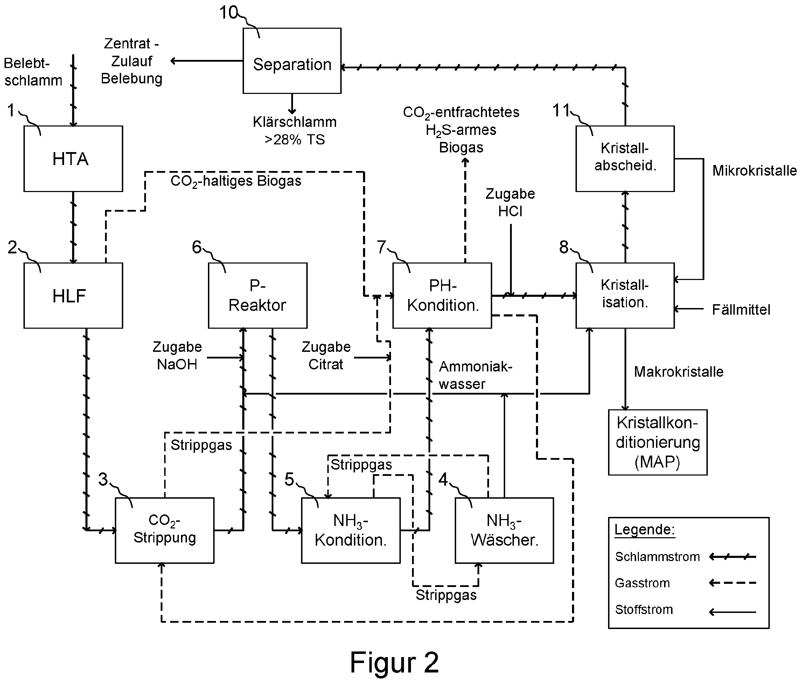

In Fig. 2 ist eine Weiterentwicklung des erfindungsgemäßen Verfahrens gezeigt. Bei der gezeigten Variante wird Belebtschlamm von einer Kläranlage verwendet, bei dem zunächst ein hydrothermaler Aufschluss (Prozessstufe 1) sowie eine Hochlastfaulung (Prozessstufe 2) durchgeführt werden. Der hydrothermale Aufschluss erfolgt bei der gezeigten Variante bei einer Temperatur von 140 °C. Durch den hydrothermalen Aufschluss der Biomasse wird die Verweilzeit in der sich anschließenden Hochlastfaulung (Prozessstufe 2) vermindert. Der hydrothermale Aufschluss von Belebtschlamm wird vorzugsweise mittels Heißwassers bei einer Temperatur von 165 °C und einem Druck von 10 bar durchgeführt. Die Schlammbehandlung erfolgt bei Temperaturen von 120 °C bis 140 °C, wodurch die Biomasse aufgeschlossen wird. Der hydrothermale Aufschluss ermöglicht eine Reduktion der NaOH-Zugabe zwischen der Hochlastfaulung (Prozessstufe 2) und dem P-Reaktor (Prozessstufe 6) und erhöht dadurch die Phosphatlöslichkeit. Ferner wird der Polymereinsatz bei der Schlammentwässerung reduziert.

Nach der Hochlastfaulung wird eine CO₂-Strippung des Faulschlammes aus der Hochlastfaulung durchgeführt (Prozessstufe 3), indem das im Schlamm gebundene CO₂ mittels Methangas oder Methangas-Gemisch (z.B. COs-entfrachtetes Biogas) aus dem Schlamm verdrängt wird. Im Zuge der CO₂-Strippung kommt es zu einer pH-Anhebung im behandelten Schlamm oder Gärrest. Der so gestrippte Schlamm oder Gärrest wird dem P-Reaktor zugeführt (Prozessstufe 6). Ein Vorteil des erfindungsgemäßen Verfahrens ist darin zu sehen, dass das bei der Hochlastfaulung entstehende CO₂, aber auch das Methangas bzw. Methangas-Gemisch für sich anschließende Prozessschritte (z.B. Nutzung im pH-Konditionierer) genutzt werden können.

Die CO₂-Strippung ermöglicht eine weitere Reduktion der Zugabe von NaOH vor Behandlung des Schlammes oder des Gärrestes im sich anschließenden P-Reaktor. Im Vergleich zur Strippung mit Luft befinden sich keine Ex-Zonen oberhalb des Behälters für die CO₂-Strippung, und es kommt auch zu keinen Methan-Emissionen in die Atmosphäre. Das CO₂-haltige Biogas (Strippgas) wird in den pH-Konditionierer (Prozessstufe 7) geleitet.

Nach der NaOH-Zugabe kommt es zu einem alkalischen Aufschluss des CO₂-gestrippten Faulschlammes im P-Reaktor (Prozessstufe 6). Die NaOH-Zugabe zwischen Hochlastfaulung (Prozessstufe 2) und P-Reaktor (Prozessstufe 6) kann durch die vorangehende CO₂-Strippung des Faulschlammes aus der Hochlastfaulung deutlich reduziert werden. Nach dem alkalischen Aufschluss des CO₂-gestrippten Faulschlammes erfolgt eine pH-Konditionierung in einem pH-Konditionierer durch Zugabe CO₂-haltigen Biogases, wodurch die HCl-Zugabe reduziert werden kann (Prozessstufe 7).

Der Schlammstrom aus dem P-Reaktor gelangt in den NH₃-Konditionierer (Prozessstufe 5). Der im NH₃-Konditionierer freigesetzte Ammoniak wird mit dem methanhaltigen Strippgas in den Ammoniak-Wäscher (Prozessstufe 4) geleitet und dort in Wasser gelöst. In einer weiteren Ausführungsform kann die Fällung des Ammoniaks durch die Zugabe von Schwefelsäure erfolgen.

Das in der Hochlastfaulung (Prozessstufe 2) entstandenen Biogas wird nach der CO2- und H2S-Entfrachtung im pH-Konditionierer (Prozesstufe 7) beispielsweise in einem Blockheizkraftwerk (BHKW) zur Strom- und Wärmeproduktion genutzt. Der Faulschlamm wird anschließend in einer Zentrifuge (Prozessstufe 10) zu Klärschlamm mit hohen TS-Gehalten (> 28 %) entwässert. Der so phosphorentfrachtete Klärschlamm kann dann zu günstigeren Konditionen verschiedenen Verwertungswegen zugeführt werden.

Das an Phosphat und Ammonium abgereicherte Zentrat aus der Prozessstufe 10 kann dann einem Belebungsbecken einer Kläranlage zugeführt werden, womit sich die Rückbelastung an Nährstoffen, insbesondere von Stickstoff, deutlich gegenüber der Ausgangssituation verringert und damit auch der Einsatz von Belüftungsenergie und Fällmitteln bei der Belebung reduziert wird.

Eine Weiterentwicklung des erfindungsgemäßen Verfahrens sieht vor, dass als Wärmeträgermedium Heißwasser, vorzugsweise bei einer Temperatur zwischen 150 °C und 180° C, vorzugsweise bei 165 °C und einem Druck von etwa 10 bar, verwendet wird. In Versuchen wurde nämlich festgestellt, dass es bei der Verwendung von Thermoöl als Wärmeübertragungsmedium aus der Abgaswärmenutzung eines BHKW bei den notwendigen höheren Thermoöl-Temperaturen von etwa 220 °C zu einem Fouling in den Wärmetauschern kommt und es aufgrund der hohen Oberflächentemperaturen zur Bildung von Melanoidinen (Kondensationsprodukten aus einem Monosaccharid und einem Amin) kommt, die nur schwer abbaubar sind. Diese Reaktion wird durch Heißwasser als Wärmeträgermedium drastisch verringert, da es zu einem deutlich besseren Wärmeübergang zwischen BHKW-Abgas und Schlamm kommt und dabei deutlich weniger schwer abbaubare Substanzen entstehen. Somit sind neben der Senkung inerter CSB auch eine Reduktion von Fouling in den Wärmetauschern und die Bildung von Melanoidinen im Belebtschlamm reduziert.

Neben der Gasflussmenge bestimmen die Mengen an gelöstem CO₂ in der Prozessstufe 3 (CO₂-Strippung) sowie der pH-Wert des Schlammes während der pH-Konditionierung (Prozessstufe 7) die Effizienz der Strippung. Zur Optimierung der Strippung können der Gasfluss variiert und der Einfluss durch Messung der pH-Werte des Schlammes vor und nach der Strippung bestimmt werden. Erfindungsgemäß wurde der Einfluss der Strippung auf den pH-Wert des Schlammes nach Zugabe unterschiedlicher Mengen an NaOH untersucht und durch die CO₂-Strippung sowie Ammoniak-Strippung optimiert. Auch durch die Variation des pH-Wertes können die NaOH-Mengen für den alkalischen Aufschluss im P-Reaktor (Prozessstufe 6) variiert und somit optimiert werden.

Zusammengefasst ermöglicht das erfindungsgemäße Verfahren eine deutliche Reduzierung von Lauge und Säure bei der Phosphatrückgewinnung aus Belebtschlämmen von Kläranlagen durch eine effiziente CO₂-Strippung sowie Ammoniak-Strippung.

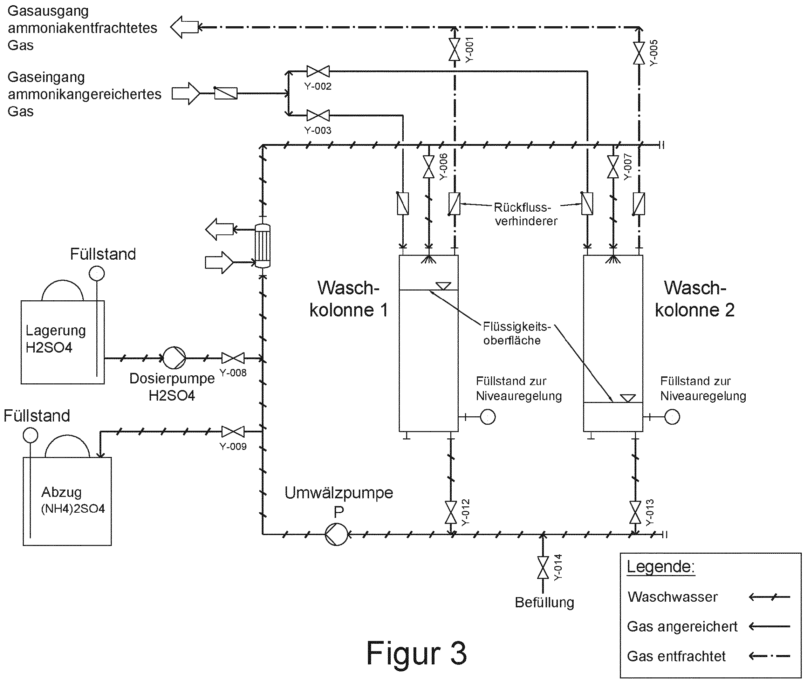

Fig. 3 zeigt eine erfindungsgemäße Vorrichtung zum Lösen von Ammoniak in Wasser zu einer wässrigen Ammoniak-Lösung, d.h. einen Ammoniak-Wäscher, der in dem erfindungsgemäßen Verfahren zur Rückgewinnung von Phosphor oder Ammonium-Stickstoff aus Güllen oder Schlämmen zum Einsatz kommt. Die erfindungsgemäße Vorrichtung umfasst wenigstens zwei Waschkolonnen (Waschkolonne 1 und Waschkolonne 2), die im Kopfbereich Ein- und Auslässe für ein Gas oder ein Gasgemisch umfassen, sowie Berieselungseinrichtungen für das Einleiten von Waschflüssigkeit zur bedarfsweisen Befüllung der Waschkolonnen. Im Fußbereich der Waschkolonnen befinden sich Anschlüsse für den Flüssigkeitstransport von und aus den wenigstens zwei Waschkolonnen.

Die Abläufe im Ammoniak-Wäscher werden anhand eines Ausführungsbeispiels erklärt. Bei dieser Variante ist beispielsweise die Waschkolonne 1 (d.h. bestehend aus wenigstens einer Kolonne) größtenteils mit Waschflüssigkeit gefüllt, während die Waschkolonne 2 (ebenfalls bestehend aus wenigstens einer Kolonne) teilentleert ist. Mittels einer Umwälzpumpe P wird Waschflüssigkeit aus der Waschkolonne 1 in die Waschkolonne 2 gefördert. Hierfür sind das Ventil Y-012 der Waschkolonne 1 geöffnet und das Ventil Y-013 der Waschkolonne 2 geschlossen. Die Befüllung der Waschkolonne 2 erfolgt über eine Berieselungseinheit im Kopfbereich. Hierfür sind das Ventil Y-006 der Waschkolonne 1 geschlossen und das Ventil Y-007 der Waschkolonne 2 geöffnet. Für die Befüllung mit Waschflüssigkeit ist das Befüllungsventil Y-014 geöffnet.

Waschkolonne 1 kann sich nun entleeren. Das Gas oder Gasgemisch wird von oben über wenigstens eine Ansaugleitung angesaugt. Die Ansaugleitung für das Gas oder Gasgemisch ist in der ersten Variante mit Rückschlagventilen bestückt. Alternativ können auch schaltbare Ventile zum Einsatz kommen. Dann wird das Ventil Y-003 der Waschkolonne 1 geöffnet, während das Ventil Y-002 der Waschkolonne 2 geschlossen ist. Nun kann sich die Waschkolonne 2 befüllen, während das zuvor eingeströmte Gas oder Gasgemisch gewaschen und nach oben verdrängt wird.

Auch bei der Waschkolonne 2 sind entweder Rückschlagventile und/oder schaltbare Ventile vorgesehen. Das heißt, das Ventil Y-005 der Waschkolonne 2 ist geöffnet und das Ventil Y-001 ist geschlossen. So kann es zu einem kontrollierten Austritt des Gases oder Gasgemisches zum Gasausgang oben kommen. Diese Vorgänge werden vorzugsweise über wenigstens eine Niveauregelung gesteuert, bevorzugt besitzen die beiden Waschkolonnen Niveauregelungen für den Füllstand der einzelnen Waschkolonnen.

In der gezeigten Variante ist zudem die Dosierung von H₂SO₄ während des Umwälzvorganges vorgesehen. Die Dosierung erfolgt in der gezeigten Variante über eine Dosierpumpe, gesteuert über ein Ventil Y-008. Der Abzug von (NH₄)₂SO₄ erfolgt über das Ventil Y-009. Vorzugsweise ist ein Füllstandsensor vorgesehen. In der gezeigten Variante ist zudem eine Temperierung der Waschflüssigkeit während der Umwälzung vorgesehen. Hierzu ist vorzugsweise ein Wärmetauscher in der Flüssigkeitsleitung nach der Umwälzpumpe P vorgesehen.

Das erfindungsgemäße Prinzip ermöglicht eine Reihenschaltung mehrerer Kolonnen auf der Ansaug- sowie Austrittsseite.

Der Fachmann wird erkennen, dass die Umwälzung auch reversibel ist, d.h. dass die Waschkolonne 2 annähernd gefüllt ist, während die Waschkolonne 1 teilentleert ist. Während die Umwälzpumpe P läuft, sind das Ventil Y-013 der Waschkolonne 2 geöffnet und das Ventil Y-012 der Waschkolonne 1 geschlossen. Dadurch wird Waschflüssigkeit aus der Waschkolonne 2 zur Waschkolonne 1 befördert. Zur Berieselung ist das Ventil Y-007 im Kopfbereich der Waschkolonne 2 geschlossen, während das Ventil Y-006 im Kopfbereich der Waschkolonne 1 geöffnet ist. Nun kann sich die Waschkolonne 1 mit Flüssigkeit befüllen.

Bei der Waschkolonne 1 erfolgt die Gaszufuhr im Kopfbereich, indem Flüssigkeit von unten über das Ventil Y-012 über die Umwälzpumpe P abgepumpt wird. Dadurch sinkt der Flüssigkeitsspiegel in der Waschkolonne 1 und es entsteht ein Unterdruck im Kopfbereich. Die Flüssigkeit aus der Waschkolonne 1 entnommene Flüssigkeit wird über das Ventil Y-007 in die Waschkolonne 2 zur Berieselungseinrichtung überführt. Mit dieser findet im Kopfbereich der Waschkolonne 2 eine Berieselung der Flüssigkeit statt, wodurch der Flüssigkeitsspiegel angehoben wird. Durch den Anstieg des Flüssigkeitsspiegels entsteht ein Überdruck. Das mit Ammoniak angereicherte Gas wird über einen Gaseingang in den Kopfbereich der Waschkolonnen geleitet. Die Regelung übernehmen die Ventile Y-006 und Y-007. Das Ammoniak-entfrachtete Gas ("gewaschenes Gas") wird letztendlich über den Gasausgang im Kopfbereich der Waschkolonnen abgeführt (kontrolliert durch die Ventile Y-001 und Y-005).

Hat der Füllstand in der Waschkolonne 2 ein bestimmtes Niveau erreicht, wird das Ventil Y-013 geöffnet, wodurch Flüssigkeit über die Umwälzpumpe P abgesaugt wird. In der Waschkolonne 2 entsteht wiederum ein Gasunterdruck. Diese Flüssigkeit dient wiederum der Berieselung über das Ventil Y-006 der Waschkolonne 1. Durch die Flüssigkeitsbefüllung der Waschkolonne 1 durch Berieselung erhöht sich der Druck, so dass das zuvor eingeströmte Gas oder Gasgemisch gewaschen und nach oben verdrängt wird. Hierfür sind die Ventile Y-001 der Waschkolonne 1 geöffnet und Y-005 der Waschkolonne 2 geschlossen. Eine Dosierung von H₂SO₄ kann während des Umwälzvorgangs erfolgen, indem das Ventil Y-008 geöffnet wird.

Sobald eine ausreichende Aufkonzentrierung der Gasbestandteile, d.h. des Ammoniaks in der Waschflüssigkeit erfolgt ist, wird die Waschflüssigkeit ganz oder teilweise ausgeschleust. Hierfür wird das Ventil Y-009 geöffnet. Dies kann auch während des Umwälzvorgangs erfolgen.

Vorzugsweise erfolgt die Regelung der Austrittsmenge über den Füllstand der Waschkolonnen, den Füllstand des Abzugsbehälters oder alternativ durch Regelung über einen Massestrom. Nach dem Ausschleusevorgang wird das Ventil Y-009 geschlossen.

Ammoniak-entfrachtetes Gas der Waschkolonne 2 gelangt über das Venti Y-005 bzw. von der Waschkolonne 1 über das Ventil Y-001 zum Gasausgang. Das mit Ammoniak angereicherte Gas kann auch im Kreislauf geführt werden. Hier werden das Ventil Y-002 und das Ventil Y-003 geöffnet, so dass das mit Ammoniak angereicherte Gas von der Waschkolone 2 in die Waschkolonen 1 oder umgekehrt geleitet werden kann. Ansonsten ist ein Gaseingang für Ammoniak-angereichertes Gas vorgesehen.

Die Zugabe neuer Waschflüssigkeit erfolgt über das Befüllungsventil Y-014.

## Patentansprüche

1. Verfahren zur Rückgewinnung von Phosphor und/oder Ammoniumstickstoff aus Güllen oder Schlämmen, umfassend die Schritte:
- Aufschluss von Gülle oder Schlamm bei alkalischem pH,
- Durchführen einer Ammoniak-Strippung mittels eines methanhaltigen-Strippgases, wodurch Ammoniak freigesetzt wird,
- Entfernen von überschüssigem Ammoniak aus dem methanhaltigen Strippgas in einem Ammoniak-Wäscher durch Lösen von Ammoniak in Wasser zu einer wässrigen Ammoniak-Lösung,
- pH-Konditionierung der behandelten Gülle oder des Schlammes durch Einsatz eines CO₂-haltigen Gases und/oder Zugabe einer Säure,
- Ausfällen eines Ammonium-Phosphat-Salzes durch Kristallisation zur Gewinnung von Phosphor und/oder Ammoniumstickstoff.

2. Verfahren nach Anspruch 1, **dadurch gekennzeichnet, dass** vor der pH-Konditionierung zusätzlich eine thermoalkalische Behandlung der Gülle oder des Schlammes bei alkalischem pH durchgeführt wird.

3. Verfahren nach Anspruch 1 oder 2, **dadurch gekennzeichnet, dass** vor der alkalischen Behandlung der Gülle oder des Schlammes zur Herbeiführung eines alkalischen pHs ein hydrothermaler Aufschluss der Gülle oder des Schlammes zu einer aufgeschlossenen Biomasse erfolgt.

4. Verfahren nach Anspruch 3, **dadurch gekennzeichnet, dass** ein Abbau der durch den hydrothermalen Aufschluss aufgeschlossenen Biomasse in einer Hochlastfaulung zu Faulschlamm und Biogas erfolgt.

5. Verfahren nach Anspruch 4, **dadurch gekennzeichnet, dass** eine CO₂-Strippung des Faulschlammes aus der Hochlastfaulung durchgeführt wird, bei der das im Schlamm gebundene CO₂ mittels Methangas oder einer Methangasmischung aus dem Schlamm verdrängt wird, wodurch es zu einer pH-Anhebung kommt.

6. Verfahren nach einem der Ansprüche 1 bis 5, **dadurch gekennzeichnet, dass** zusätzlich eine Ammoniak-Konditionierung durch Zugabe von Ammoniakwasser aus einem Ammoniak-Wäscher durchgeführt wird.

7. Verfahren nach Anspruch 6, **dadurch gekennzeichnet, dass** das Strippgas für die CO₂-Strippung aus der pH-Konditionierung und/oder dem Ammoniak-Wäscher gewonnen wird.

8. Verfahren nach Anspruch 3, **dadurch gekennzeichnet, dass** der hydrothermale Aufschluss bei einer Temperatur zwischen 100 und 160°C erfolgt und dass die Hochlastfaulung bei einer Temperatur zwischen 50 und 65°C und bei einem pH zwischen 6,5 und 7,5 durchgeführt wird.

9. Verfahren nach einem der Ansprüche 1 bis 8, **dadurch gekennzeichnet, dass** nach der pH-Konditionierung der pH-Wert durch Zugabe von HCl zwischen 8,5 bis 9,5 eingestellt wird.

10. Verfahren nach einem der Ansprüche 1 bis 9, **dadurch gekennzeichnet, dass** nach der Fällung und Kristallisation Mikrokristalle mittels eines oder mehrerer Hydrozyklone und/oder Nasssiebe abgetrennt und dem Kristallisationsprozess rückgeführt werden.

11. Verfahren nach einem der Ansprüche 1 bis 10, **dadurch gekennzeichnet, dass** die Ammoniak-Wäsche über einen Umwälzvorgang mittels zwei Waschkolonnen erfolgt mit denen Ammoniak-entfrachtetes Gas ausgeleitet und dem Prozess rückgeführt wird.

12. Verfahren nach Anspruch 11, **dadurch gekennzeichnet, dass** eine Zugabe von H₂SO₄ während des Umwälzprozesses und/oder eine Temperierung der Waschflüssigkeit erfolgt.

13. Verfahren nach einem der Ansprüche 1 bis 12, **dadurch gekennzeichnet, dass** beliebige Gase durch den Umwälzvorgang in den Waschkolonnen gefördert und komprimiert werden.

14. Vorrichtung zur Rückgewinnung von Phosphor und/oder Ammoniumstickstoff aus Güllen oder Schlämmen zum Lösen von Ammoniak in Wasser zu einer wässrigen Ammoniak-Lösung, umfassend:
- Einrichtungen zum Aufschluss von alkalisch behandelter Gülle oder Schlamm bei alkalischem pH,
- Einrichtungen zum Durchführen einer Ammoniak-Strippung mittels eines methanhaltigen-haltigen Strippgases, wodurch Ammoniak freigesetzt wird,
- Einrichtungen zum Entfernen von überschüssigem Ammoniak aus dem methanhaltigen Strippgas in einem Ammoniak-Wäscher durch Lösen von Ammoniak in Wasser zu einer wässrigen Ammoniak-Lösung,
- Einrichtungen zur pH-Konditionierung der behandelten Gülle oder des Schlammes durch Zugabe einer Säure und/oder eines CO₂-haltigen Gases oder Gasgemisches,
- Einrichtungen zum Ausfällen eines Ammonium-Phosphat-Salzes durch Kristallisation zur Gewinnung von Phosphor und/oder Ammoniumstickstoff.

15. Vorrichtung nach Anspruch 14, **dadurch gekennzeichnet, dass** der Ammoniak-Wäscher wenigstens zwei Waschkolonnen umfasst, wobei bei der ersten Waschkolonne Einrichtungen zur Gaszufuhr im Kopfbereich vorgesehen sind, indem Flüssigkeit von unten über eine Umwälzpumpe abgepumpt wird, wodurch der Flüssigkeitsspiegel sinkt und ein Unterdruck im Kopfbereich der ersten Waschkolonne entsteht, wobei die Flüssigkeit über Leitungen in den Kopfbereich der zweiten Waschkolonne überführt wird die im Kopfbereich mit einer Berieselungseinrichtung ausgerüstet ist, wodurch eine Berieselung des Behälterinneren mit Flüssigkeit erfolgt und der Flüssigkeitsspiegel in der zweiten Waschkolonne angehoben wird, wodurch ein Überdruck im Behälterinneren der zweiten Waschkolonne entsteht, so dass das Ammoniak-entfrachtete Gas über den Gasausgang ausleitbar und dem Prozess rückführbar ist, während gleichzeitig in der ersten Waschkolonne ein Unterdruck entsteht und mit Ammoniak angereichertes Gas über einen Gaseingang im Kopfbereich der Kolonne ansaugbar ist.
